# EUROPEAN PATENT SPECIFICATION

(11) **EP 4 120 145 B1**
(45) Date of publication and mention of the grant of the patent: **06.05.2026**
(21) Application number: 21185130.8
(22) Date of filing: 12.07.2021
(51) Int. Cl.: G06N 10/20, G06N 10/40

(54) **ATOMIC QUANTUM PROCESSOR**
ATOMARER QUANTENPROZESSOR
PROCESSEUR QUANTIQUE ATOMIQUE

(43) Date of publication of application: 18.01.2023
(73) Proprietor: Max-Planck-Gesellschaft zur Förderung der Wissenschaften e.V., 80539 München (DE); Eberhard-Karls-Universität Tübingen, 72074 Tübingen (DE)
(72) Inventor: Bloch, Immanuel Felix, 85748 Garching (DE); Groß, Christian, 85748 Garching (DE)
(74) Representative: Hoffmann Eitle

(56) References cited:
- CALARCO T. ET AL: "Quantum computations with atoms in optical lattices: Marker qubits and molecular interactions", PHYSICAL REVIEW A (ATOMIC, MOLECULAR, AND OPTICAL PHYSICS), vol. 70, no. 1, 1 July 2004 (2004-07-01), USA, XP055873713, ISSN: 1050-2947, DOI: 10.1103/PhysRevA.70.012306
- DORNER U ET AL: "Quantum logic via optimal control in holographic dipole traps; Quantum logic via optimal control in holographic dipole traps", JOURNAL OF OPTICS B: QUANTUM AND SEMICLASSICAL OPTICS, INSTITUTE OF PHYSICS PUBLISHING, BRISTOL, GB, vol. 7, no. 10, 1 October 2005 (2005-10-01), pages S341 - S346, XP020093209, ISSN: 1464-4266, DOI: 10.1088/1464-4266/7/10/020
- ANNABELLE BOHRDT ET AL: "Multiparticle interactions for ultracold atoms in optical tweezers: Cyclic ring-exchange terms", ARXIV.ORG, CORNELL UNIVERSITY LIBRARY, 201 OLIN LIBRARY CORNELL UNIVERSITY ITHACA, NY 14853, 30 September 2019 (2019-09-30), XP081498345
- CHRISTOF WEITENBERG ET AL: "A quantum computation architecture using optical tweezers", ARXIV.ORG, CORNELL UNIVERSITY LIBRARY, 201 OLIN LIBRARY CORNELL UNIVERSITY ITHACA, NY 14853, 13 July 2011 (2011-07-13), XP080515355, DOI: 10.1103/PHYSREVA.84.032322

## Description

### Technical Field

The present invention relates to a quantum processor architecture. Corresponding implementations relate to a system for performing quantum operations and a method for performing quantum operations. The present invention can, for example, find an application in the growing sector of quantum technology, in particular in the fields of quantum computing and quantum simulation.

### Technical Background

In the expanding field of quantum technologies, two important hurdles to be overcome for paving the way for industrial applications are the issue of decoherence and the possibility of scalability.

The issue of decoherence relates to the problem that quantum systems have the tendency to decohere when interacting with an environment, thereby losing information and in turn reducing their possibility to harness the quantum effect whose exploitation lies at the core of all quantum technologies.

The question of scalability relates to the circumstance that in order to properly make use of quantum effects in an application scenario of technological interest often a single atom, ion or the like that can be controlled at will is not sufficient. Instead, many applications in the field of quantum technologies require a large number of elements, that is, a large number of atoms, ions or the like. Thus, it is important that a system cannot only control one element to a high degree but also can be scaled up to many more elements, if possible, arbitrary many and further, if possible, without any or at least without significant overhead when increasing the number of elements.

Scalability, however, does not only relate to the question of providing a system of many elements but also to the control these many elements, if possible at the same time. It is clear that a system with many elements that can be addressed, controlled and manipulated only one-by-one in a sequential fashion will likely be at least impracticable.

Taken together, a system is required in which many constituents can be put together, all of these constituents can be controlled individually but in a parallel fashion while at the same time the effects of decoherence are controlled and suppressed as well.

From T. Calarco et al.: "Quantum computations with atoms in optical lattices: Marker qubits and molecular interactions", Physical Review A, vol. 70, no. 1, 1 July 2004, a scheme for quantum computation with neutral atoms based on the concept of "marker" atoms is known.

From U. Dorner et al.: "Quantum logic via optimal control in holographic dipole traps; Quantum logic via optimal control in holographic dipole traps", Journal of Optics B, vol. 7, no. 10, 1 October 2005, a scheme for a quantum logic with neutral atoms stored in an array of holographic dipole traps is known.

From Annabelle Bohrdt et al.: "Multiparticle interactions for ultracold atoms in optical tweezers: Cyclic ring-exchange terms", arxiv.org, arXiv:1910:00023, 30 September 2019, a protocol for implementing a SU(N) invariant multi-body interactions in optical tweezer arrays is known.

From Christof Weitenberg et al.: "A quantum computation architecture using optical tweezers", arxiv.org, 13 July 2011, a complete architecture for scalable quantum computation with ultracold atoms in optical lattices using optical tweezers focused to the size of a lattice spacing is known.

### Summary

The above problems are solved by the subject-matter of the independent claims. Further preferred embodiments are given by the subject-matter of the dependent claims.

### Brief Description of the Drawings

Embodiments of the present invention will now be described with reference to the figures in which:
- Figs. 1A-B: show schematic configurations of a system using an architecture according to an embodiment of the present invention,
- Figs. 2A-D: show steps of a parallel quantum operation according to an embodiment of the present invention, and
- Fig. 3: shows a flow diagram of a parallel quantum operation according to an embodiment of the present invention.

### Detailed Description

A quantum operation architecture based on collisional quantum gates between neutral atoms is introduced. This architecture may be used at least for quantum computations as well as quantum simulations.

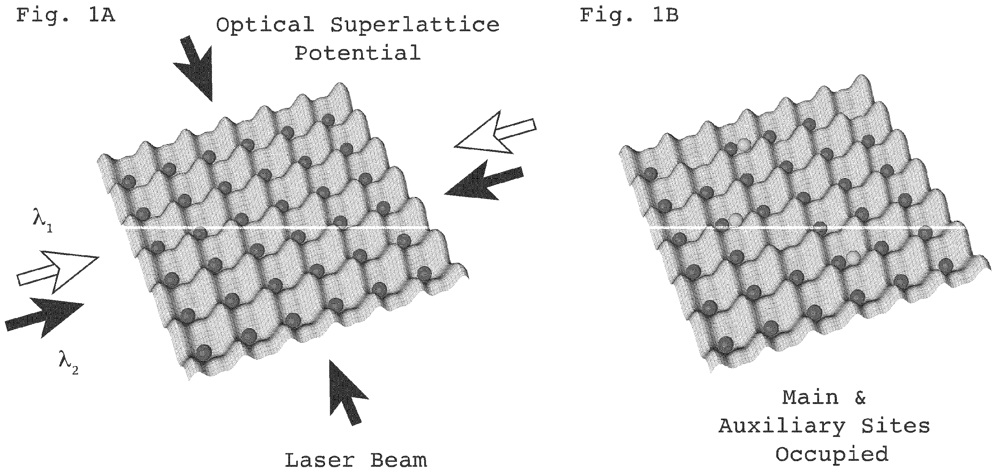

Figs. 1A-B show schematic configurations of a system using an architecture according to an embodiment of the present invention. In detail, Fig. 1A shows a schematic view of an optical lattice including an optical superlattice potential filled with atoms and Fig. 1B shows a schematic view of the of the optical lattice where main and auxiliary sites are occupied. In the following the experimental setup as well as preparatory steps therefore are described with reference to these figures.

First, a beam of neutral atoms is produced and slowed down such that it can be captured in a magneto-optical trap. A magneto-optical trap uses laser cooling and a spatially varying magnetic field to trap the atoms, thereby being able to produce samples of cold trapped neutral atoms. Temperatures typically achieved therein can be as low as several micro Kelvin. Next, the trapped atoms are cooled by laser cooling and/or evaporative cooling such that temperature below the quantum degeneracy temperature are reached. The quantum degeneracy temperature describes the temperature at which the neutral atoms show quantum degeneracy effects. Laser cooling relates to several techniques of cooling atomic or even molecular samples to temperatures close to absolute zero, i.e. 0 Kelvin. Laser cooling relies on the possibility to manipulate the velocity distribution of an ensemble of particles, which is related to its thermodynamic temperature, due to the change in momentum of a particle upon absorption and re-emission of a photon. Evaporative cooling refers to a technique of manipulating the parameters of the trap in which the most energetic atoms in the trap escape while the remaining atoms re-thermalize via collisions between them, thus cooling the remaining atoms.

Subsequently, the neutral atoms are initialized into an atomic qubit array, also named register, which can either be realized by direct cooling, e.g. direct laser cooling, to the motional ground state or by using adiabatic preparation of a gapped many-body ground state with exactly one atom in each lattice site, wherein each of the atoms is in an equal spin state. This array may be realized by an optical lattice, which is formed by the interference of laser beams. The laser beams create a spatially periodic polarization pattern which trap the neutral atoms due to the Stark shift. In Fig. 1A this is illustrated by the four black arrows indicating laser beams with a wavelength λ₂. As can be seen in Fig. 1A, each site of the optical lattice is occupied by exactly one atom. 'Qubit' is a term used in quantum computing and related field, sometimes also named 'quantum bit' or 'qbit', and describes a basic unit of quantum information, namely a quantum version of the classic binary bit realized by a two-state device. In more detail, a qubit may be a two-state quantum system or may be a two-level quantum system. Further, two levels of a quantum system having multiple levels (including more than two levels) may be considered as a qubit as well. Such a scenario may be possible in particular in cases in which the two levels constituting the qubit are well separated from the remaining levels and the dynamics are confined to these two levels. 'Gapped many-body ground state' refers to the circumstance that the system has a finite energy gap between the ground state, which may be degenerate, and the first excited states. An adiabatic preparation refers to a scheme in which the transformation is done adiabatically, i.e. without leading to excitations in the system.

This initial state of the register may be separable and can be prepared by suitable local single qubit gates between the two states of the computational basis. Here, separable means that the state describing all the atoms is not an entangled state. 'Computational basis' refers to the basis of states which is planned to be used for the quantum computation resp. quantum operation. 'Gate' refers to a quantum gate, i.e. a basic operation performed on a small number of elements; in other words, gate refers to the quantum version of a logical gate known in classical computation theory. A local single qubit gate (or one-qubit gate) thus refers to a basic operation performed locally on a single qubit. A two-qubit gate operation refer to an operation performed on two qubits.

In an aspect of the present invention, the two states of the atoms used for the computational basis are chosen such that they exhibit an approximate SU(2) symmetry. In this case, these atomic qubits are protected from decoherence during all two-qubit gate operations and waiting times. An example for atoms possibly having such an approximate SU(2) symmetry are fermionic Lithium atoms in a magnetic field. This magnetic field may have a magnitude of several tens of millitesla. This magnetic field may in particular be strong enough to decouple the nuclear and electronic spin. In other words, a system according to the present invention may be configured to apply a magnetic field to the atoms. Thus, in some embodiments, the present application defines a fermionic quantum processor.

In an embodiment of the present invention, a superlattice is used, that is, the optical lattice is transformed into a superlattice, thereby doubling the number of sites in one spatial direction. If the optical lattice was filled with one atom per site before this transformation, in the superlattice one site per pair remains empty. The site occupied by an atom may be referred to as main site while the empty site may be referred to as auxiliary site. This transformation of a 'standard' optical lattice to a superlattice can be achieved by modified the wavelengths of the two standing-wave lasers forming the lattice such that the ratio of the wavelengths takes a value of 2. This superlattice is schematically shown in Fig. 1A showing a second wavelength λ₁ illustrated by the grey arrows as well as the two sites: Each left site being a main site is occupied by an atom and each right site being an auxiliary site is empty. Further, Fig. 1B shows a configuration in which some superlattice sites are doubly occupied, that is, both main site and auxiliary site are occupied. For better distinction only, the atom at the auxiliary site is illustrated in a different color shade. Since some superlattice sites contain two atoms, some other superlattice sites contain no atoms, as can also be seen in Fig. 1B.

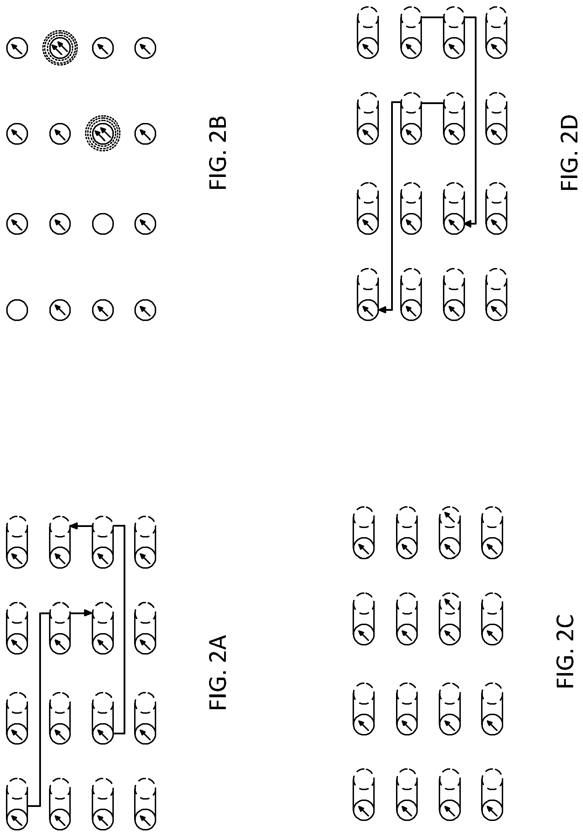

Figs. 2A-D show steps of a parallel quantum operation according to an embodiment of the present invention.

In a first step, illustrated by Fig. 2A, at least one atom on a main site is moved to an auxiliary site of another atom with which an interaction in a subsequent step is planned. In other words, the two atoms forming a pair are brought in vicinity to each other in preparation for the interaction that is to follow. This can be realized, for example, by optical tweezers moving the atom from the main site to the auxiliary site. An optical tweezer is based on the concept that a highly focused laser beam can hold and move microscopic and sub-microscopic objects, such as neutral atoms; the underlying effect is based on the attractive or repulsive force of the laser light between the particle and the surrounding medium, wherein the direction of the force depends on the relative refractive index between particle and surrounding medium. This process may also be done in parallel for a plurality of pairs of atoms, that is, a plurality of atoms may be moved, for example, by means of optical tweezers, from their main site to the auxiliary site of their respective atom with which they form a pair. In the example shown in Fig. 2A two atoms are moved from their main site to the auxiliary site of the other atom with which they form a pair. This parallel execution of the step allows for a fast and scalable operation.

In a second step, illustrated by Fig. 2B, the superlattice sites, i.e. the main sites and the auxiliary sites, respectively, are merged for a predetermined amount of time. This can be realized in a similar fashion as the forming of the superlattice, i.e. by manipulating the wavelength of the standing-wave lasers. By merging an occupied main site and an occupied auxiliary site, the two atoms undergo a controlled collisional operation. In other words, a two-qubit gate is realized by this controlled collisional operation. This two-qubit gate is not particularly limited, that is, can be a variety of two-qubit gates and in particular can be one two-qubit gate necessary for realizing a universal quantum computer. This parallel execution of the step allows for a fast and scalable operation.

In a third step, illustrated by Fig. 2C, after the predetermined amount of time, the merging of main site and auxiliary site is reversed, i.e. the optical lattice is returned to its superlattice configuration in which main site and auxiliary site are separated. This step can, in a way, be seen as the inverse of the second step. Since this step is performed for all pairs at the same time, also this parallel execution allows for a fast and scalable operation. This operation may be performed in such a way that the atom that was on the main site before the merging is at the main site after reversing the merging and, correspondingly, the atom that on the auxiliary site before the merging is at the auxiliary site after reversing the merging.

The entire process, merging, staying merged, and reversing, may be controlled. In other words, the relevant parameters for each part of the process as well as the entire process can be controlled. This includes, for example, the time for each of the three steps, i.e. in what time the merging step is performed, how long the atoms stay merged, and in what time the merged configuration is reversed. Alternative parameters may be the temporal profile of the merging process.

In a fourth step, illustrated by Fig. 2D, the atoms on the auxiliary sites are returned to their respective main sites. This step can, in a way, be seen as the inverse of the first step. This can be realized, similar to the first step, by optical tweezers.

All steps taken together thus can realize a variety of two-qubit gate between any pair of atoms. Moreover, since all steps, the moving, the merging for a predetermined amount of time, and the returning can be done in parallel for all pairs of atoms, the entire operation can be done in a fast and scalable manner.

In an aspect of the present invention, a quantum operation of all of the atoms in the system is performed at the same time, thus providing a system for parallel quantum operations.

By using optical superlattices and optical tweezers, the architecture allows one to realize two-qubit gates between arbitrary pairs of qubits, leading to full connectivity, which is flexible and dynamically controllable, in a massively parallel way. In particular, the embodiments of the present invention cover both analog and digital quantum operations.

Moreover, the present invention uses the capabilities of quantum gas microscopy and unites the advantages of an AMO (atomic, molecular and optical) platform of scalability and long coherence times due to optimal isolation with local programmability, complete connectivity of all qubits, complete parallelization of one- and two-qubit gate operations and effective avoidance of local errors in two-qubit gate operations and in waiting/storage times due to the intrinsic SU(2) symmetry of the qubit of choice.

In particular, the present framework combines decisive advantages, which is achieved by i) usage of the control of the SU(2) symmetry of the qubit leading to protection from local decoherence, ii) local optical control for moving single atoms, thus achieving arbitrary, freely configurable connectivity, iii) realizing two-qubit quantum gates without breaking the SU(2) symmetry due to only global control by manipulating the optical lattice, and iv) implementation of one-qubit quantum gates via focussed Raman beams. Only in step iv) the SU(2) symmetry of the qubits is broken which is, however, a fundamental aspect for every quantum operation, i.e. unavoidable for local programmability.

Moreover, the present framework uses neutral atoms, hence is intrinsically scalable due to the qubits being all exactly identical and the existing technologies of optical traps for neutral atoms. In addition, the global approach of realizing the collisional quantum gates provides the advantage of requiring only the lasers for the traps and no further lasers for controlling the system, which very often present a limiting aspect regarding scalability of the system. In particular, the present framework can employ quantum gate operations using only two global parameters. These two parameters may be the relative phase and the amplitude of the superlattice. Moreover, in the present framework there is no crosstalk between operations at different qubits since the typical sources for crosstalk are not present. A further aspect of the present invention is that all aspects, but in particular the dynamical aspects, can be optimized by means of quantum optimal control theory to further improve the efficiency, for example in terms of time required for or accuracy of the operations, of the presented framework.

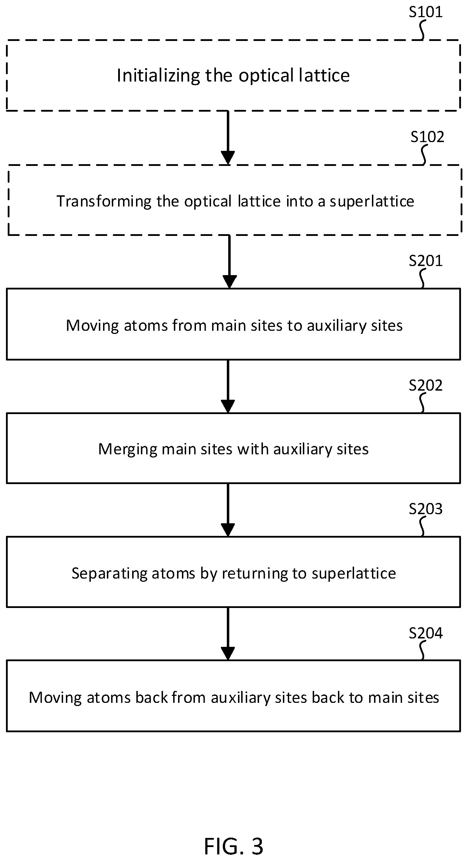

Fig. 3 shows a flow diagram of a parallel quantum operation according to an embodiment of the present invention. Fig.3 shows in a more general manner the steps corresponding to the experimental steps shown in Figs. 2A-D.

In a first preparatory step S101, the system is initialized, that is the neutral atoms are arranged in the optical lattice. Preferably, the atoms are in a separable state, for example in a gapped many-body ground state with exactly one atom in each lattice site.

In a second preparatory step S102, the optical lattice is transformed into a superlattice. As explained above, this can be achieved by modifying the wavelengths of the two standing-wave lasers forming the lattice such that the ratio of the wavelengths takes a value of 2.

In a first step of the operation S201, at least one atom is moved. In more detail, at least one atom on a main site is moved to an auxiliary site of another atom with which an interaction in a subsequent step is planned. In other words, the two atoms forming a pair are brought together in preparation for the interaction that is to follow.

In a second step S202, a process of merging the main sites with their respective auxiliary sites of the super lattice is performed. As explained above, this can be realized in a similar fashion as the forming of the superlattice, i.e. by manipulating the wavelength of the standing-wave lasers. By merging an occupied main site and an occupied auxiliary site, the two atoms undergo a controlled collisional operation. In other words, a two-qubit gate is realized by this controlled collisional operation.

In a third step S203, after the predetermined time the controlled collisional operation takes, the merging is reversed, that is the optical lattice is returned to its superlattice configuration, in which it main sites and auxiliary sites are separated from each other.

In a fourth step S204, the atoms are returned to their original positions, that is, the atoms at the auxiliary sites are returned to their respective main sites. This step may be facilitated by optical tweezers, in line with the above explanations.

In a further embodiment, a method in line with the above description is embedded in an application, for example as a service. This application may be an application to perform a quantum operation, such as a quantum computation or a quantum simulation.

For example, a problem may be provided (posed) to a system capable of performing the above method, said method being able to solve said problem. Then, the method is executed, possibly several times, and a solution is provided in response to the posed problem.

Such an application may in particular be provided via a network such as the internet or a cloud service. That is, the problem to be solved is provided via a network interface, a solution is found by executing the herein described method and the solution is provided via the network interface. Accordingly, the party providing the problem and receiving the solution may be different from the party executing the method and may further not be physically present at the system performing the method.

In other words, an embodiment of the present invention is a method of providing a service for performing a quantum operation, the method comprising the steps of: receiving a problem to be solved through the quantum operation, executing the method for performing the quantum operation as described elsewhere in this document, thereby obtaining a solution to the problem, providing the solution to the problem as a product of the provided service.

## Claims

1. A system for performing quantum operations comprising an optical superlattice and a plurality of optical tweezers, wherein
the system further comprises means for controlling the optical superlattice;
the optical superlattice comprises a plurality of main sites;
each main site comprises a storage site and an auxiliary site, each of the storage site and the auxiliary site is configured to hold an atom;
the means for controlling the optical superlattice are configured to merge the storage site and the auxiliary site of each main site in parallel by modifying the optical superlattice; and
the plurality of optical tweezers is configured to move atoms provided in the plurality of main sites from one main site to another main site.

2. The system according to claim 1, wherein
the means for controlling the optical superlattice are further configured to merge the storage site and the auxiliary site of each main site for a predetermined amount of time by modifying the optical superlattice; and
the means for controlling the optical superlattice are configured to separate the storage site and the auxiliary site of each main site after the predetermined amount of time by modifying the optical superlattice.

3. The system according to claim 1 or 2, wherein
the system further comprises atoms having an approximate SU(2) symmetry.

4. The system according to any one of claims 1 to 3, wherein
the means for controlling the optical superlattice are configured to merge the storage site and the auxiliary site of each main site by modifying the optical superlattice such that the storage site and the auxiliary site of each of the main sites form an interaction site that is configured to hold up to two atoms.

5. The system according to any one of claims 1 to 4, wherein the system further comprises
equipment for realizing the optical superlattice;
equipment for realizing the plurality of optical tweezers; and
means for controlling the plurality of optical tweezers.

6. The system according to claim 5, wherein the equipment for realizing the optical superlattice comprises
lasers configured to output counter-propagating laser beams, wherein a commensurate wavelength ratio of the wavelengths of the lasers is 2; and
cooling means configured to cool atoms to sub-Kelvin temperatures.

7. The system according to claim 5 or 6, wherein the equipment for realizing the plurality of optical tweezers comprises
lasers, each configured to output a focused beam such that an atom can be confined with a beam waist of the laser.

8. The system according to any one of claims 1 to 7, wherein
the means for controlling the optical superlattice are configured to change the potential depth and the periodicity of the superlattice.

9. The system according to any one of claims 5 to 8, wherein
the means for controlling the plurality of optical tweezers include at least one spatial light modulator configured to move atoms in the optical superlattice.

10. A method for performing quantum operations in a system according to claim 1, the method comprising the steps of:
merging the storage site and the auxiliary site of each main site in parallel; and
moving atoms provided in the plurality of main site from one main site to another main site.

11. A method of providing a service for performing a quantum operation, the method comprising the steps of:
receiving a problem to be solved through the quantum operation,
executing the method for performing the quantum operation according to claim 10, thereby obtaining a solution to the problem,
providing the solution to the problem as a product of the provided service.

## Patentansprüche

1. System zum Durchführen von Quantenoperationen, das ein optisches Supergitter und eine Vielzahl von optischen Pinzetten umfasst, wobei
das System weiter Mittel zum Steuern des optischen Supergitters umfasst;
das optische Supergitter eine Vielzahl von Hauptplätzen umfasst;
jeder Hauptplatz einen Speicherplatz und einen Hilfsplatz umfasst, wobei jeder des Speicherplatzes und des Hilfsplatzes so ausgebildet ist, dass er ein Atom hält;
die Mittel zum Steuern des optischen Supergitters so ausgebildet sind, dass sie den Speicherplatz und den Hilfsplatz für jeden Hauptplatz durch Modifizieren des optischen Supergitters parallel zusammenführen; und
die Vielzahl von optischen Pinzetten so ausgebildet ist, dass sie Atome, die in der Vielzahl von Hauptplätzen bereitgestellt sind, von einem Hauptplatz zu einem anderen Hauptplatz bewegen.

2. System nach Anspruch 1, wobei
die Mittel zum Steuern des optischen Supergitters weiter so ausgebildet ist, dass sie den Speicherplatz und den Hilfsplatz von jedem Hauptplatz für eine vorbestimmte Zeitdauer durch Modifizieren des optischen Supergitters zusammenführen; und
die Mittel zum Steuern des optischen Supergitters so ausgebildet sind, dass sie den Speicherplatz und den Hilfsplatz für jeden Hauptplatz nach der vorbestimmten Zeitdauer durch Modifizieren des optischen Supergitters trennen.

3. System nach Anspruch 1 oder 2, wobei
das System weiter Atome umfasst, die eine ungefähre SU(2)-Symmetrie aufweisen.

4. System nach einem der Ansprüche 1 bis 3, wobei
die Mittel zum Steuern des optischen Supergitters so ausgebildet sind, dass sie den Speicherplatz und den Hilfsplatz von jedem Hauptplatz durch Modifizieren des optischen Supergitters so zusammenführen, dass der Speicherplatz und der Hilfsplatz von jedem der Hauptplätze einen Wechselwirkungsplatz bilden, der so ausgebildet ist, dass er bis zu zwei Atome hält.

5. System nach einem der Ansprüche 1 bis 4, wobei das System weiter Folgendes umfasst:
Ausrüstung zum Realisieren des optischen Supergitters;
Ausrüstung zum Realisieren der Vielzahl von optischen Pinzetten; und
Mittel zum Steuern der Vielzahl von optischen Pinzetten.

6. System nach Anspruch 5, wobei die Ausrüstung zum Realisieren des optischen Supergitters Folgendes umfasst:
Laser, die so ausgebildet sind, dass sie entgegengesetzt propagierende Laserstrahlen ausgeben, wobei ein kommensurables Wellenlängenverhältnis der Wellenlängen der Laser 2 beträgt; und
Kühlungsmittel, die so ausgebildet sind, dass sie Atome auf Sub-Kelvin-Temperaturen abkühlen.

7. System nach Anspruch 5 oder 6, wobei die Ausrüstung zum Realisieren der Vielzahl von optischen Pinzetten Folgendes umfasst:
Laser, die jeweils so ausgebildet sind, dass sie einen fokussierten Strahl so ausgeben, dass ein Atom mit einer Strahltaille des Lasers eingeschlossen werden kann.

8. System nach einem der Ansprüche 1 bis 7, wobei
die Mittel zum Steuern des optischen Supergitters so ausgebildet sind, dass sie die Potenzialtiefe und die Periodizität des Supergitters verändern.

9. System nach einem der Ansprüche 5 bis 8, wobei
die Mittel zum Steuern der Vielzahl von optischen Pinzetten mindestens einen räumlichen Lichtmodulator einschließen, der so ausgebildet ist, dass er Atome in dem optischen Supergitter bewegt.

10. Verfahren zum Durchführen von Quantenoperationen in einem System nach Anspruch 1, wobei das Verfahren die folgenden Schritte umfasst:
paralleles Zusammenführen des Speicherplatzes und des Hilfsplatzes von jedem Hauptplatz; und
Bewegen von Atomen, die in der Vielzahl von Hauptplätzen bereitgestellt sind, von einem Hauptplatz zu einem anderen Hauptplatz.

11. Verfahren zum Bereitstellen eines Dienstes zum Durchführen einer Quantenoperation, wobei das Verfahren die folgenden Schritte umfasst:
Empfangen eines durch die Quantenoperation zu lösenden Problems,
Ausführen des Verfahrens zum Durchführen der Quantenoperation nach Anspruch 10, dadurch Erhalten einer Lösung für das Problem,
Bereitstellen der Lösung für das Problem als Produkt des bereitgestellten Dienstes.

## Revendications

1. Système pour réaliser des opérations quantiques comprenant un super-réseau optique et une pluralité de pinces optiques, dans lequel
le système comprend en outre des moyens pour commander le super-réseau optique ;
le super-réseau optique comprend une pluralité de sites principaux ;
chaque site principal comprend un site de stockage et un site auxiliaire, le site de stockage et le site auxiliaire étant chacun configurés pour contenir un atome ;
les moyens pour commander le super-réseau optique sont configurés pour fusionner le site de stockage et le site auxiliaire de chaque site principal en parallèle en modifiant le super-réseau optique ; et
la pluralité de pinces optiques est configurée pour déplacer des atomes présents dans la pluralité de sites principaux d'un site principal à un autre site principal.

2. Système selon la revendication 1, dans lequel
les moyens pour commander le super-réseau optique sont en outre configurés pour fusionner le site de stockage et le site auxiliaire de chaque site principal pendant une durée prédéterminée en modifiant le super-réseau optique ; et
les moyens pour commander le super-réseau optique sont configurés pour séparer le site de stockage et le site auxiliaire de chaque site principal après la durée prédéterminée en modifiant le super-réseau optique.

3. Système selon la revendication 1 ou la revendication 2, dans lequel
le système comprend en outre des atomes présentant une symétrie SU(2) approximative.

4. Système selon l'une quelconque des revendications 1 à 3, dans lequel
les moyens pour commander le super-réseau optique sont configurés pour fusionner le site de stockage et le site auxiliaire de chaque site principal en modifiant le super-réseau optique de telle sorte que le site de stockage et le site auxiliaire de chacun des sites principaux forment un site d'interaction qui est configuré pour contenir jusqu'à deux atomes.

5. Système selon l'une quelconque des revendications 1 à 4, dans lequel le système comprend en outre
des équipements pour réaliser le super-réseau optique ;
des équipements pour réaliser la pluralité de pinces optiques ; et
des moyens pour commander la pluralité de pinces optiques.

6. Système selon la revendication 5, dans lequel les équipements pour réaliser le super-réseau optique comprennent
des lasers configurés pour délivrer en sortie des faisceaux laser à contre-propagation, dans lequel un rapport de longueurs d'onde proportionnées des longueurs d'onde des lasers est 2 ; et
des moyens de refroidissement configurés pour refroidir les atomes à des températures sub-kelvin.

7. Système selon la revendication 5 ou la revendication 6, dans lequel les équipements pour réaliser la pluralité de pinces optiques comprennent
des lasers, configurés chacun pour délivrer en sortie un faisceau focalisé de telle sorte qu'un atome puisse être confiné avec un col de faisceau du laser.

8. Système selon l'une quelconque des revendications 1 à 7, dans lequel
les moyens pour commander le super-réseau optique sont configurés pour changer la profondeur de potentiel et la périodicité du super-réseau.

9. Système selon l'une quelconque des revendications 5 à 8, dans lequel
les moyens pour commander la pluralité de pinces optiques incluent au moins un modulateur spatial de lumière configuré pour déplacer les atomes dans le super-réseau optique.

10. Procédé de réalisation d'opérations quantiques dans un système selon la revendication 1, le procédé comprenant les étapes consistant à :
fusionner le site de stockage et le site auxiliaire de chaque site principal en parallèle ; et
déplacer les atomes présents dans la pluralité de sites principaux d'un site principal à un autre site principal.

11. Procédé de fourniture d'un service pour réaliser une opération quantique, le procédé comprenant les étapes consistant à :
recevoir un problème devant être résolu au moyen de l'opération quantique,
exécuter le procédé de réalisation de l'opération quantique selon la revendication 10, obtenir ainsi une solution au problème,
fournir la solution au problème en tant que produit du service fourni.
